Europäisches Patentamt

European Patent Office

Office européen des brevets

(11) Veröffentlichungsnummer: **0 453 980 A2**

# (12) EUROPÄISCHE PATENTANMELDUNG

(21) Anmeldenummer: **91106300.6**

(22) Anmeldetag: **19.04.91**

(51) Int. Cl.5: **A21D 13/00, B65D 65/46**

(30) Priorität: **24.04.90 DE 4012985**

(43) Veröffentlichungstag der Anmeldung:
**30.10.91 Patentblatt 91/44**

(84) Benannte Vertragsstaaten:
**AT BE CH ES FR GB IT LI NL**

(71) Anmelder: **W. u. H. Küchle GmbH & Co.**
**Bahnhofstrasse 12**
**W-8870 Günzburg(DE)**

(72) Erfinder: **Küchle, Bruno**
**Mozartring 10**
**W-8870 Günzburg(DE)**
Erfinder: **Küchle, Kathrin**
**Brentanostrasse 5**
**W-8870 Günzburg(DE)**
Erfinder: **Schuster, Dieter Alois**
**Kruckenbergstrasse 16**
**W-8870 Günzburg(DE)**
Erfinder: **Geiger, Johannes**
**Am Pulverhäusle 8**
**W-8870 Günzburg(DE)**

(74) Vertreter: **Liebau, Gerhard, Dipl.-Ing.**
**Birkenstrasse 39 Postfach 22 02 29**
**W-8900 Augsburg 22(DE)**

(54) Verpackung für Gegenstände, insbesondere Lebensmittel.

(57) Die Verpackung für Gegenstände, insbesondere Lebensmittel, besteht zumindest teilweise aus gebackenem Teig auf der Basis von Stärke und/oder Mehl. Sie weist einen Einsatz (3a, 3b; 3') auf, der durch Schneiden oder Stanzen einer ebenen Platte aus dem gebackenen Teig hergestellt ist und zum getrennten Verpacken von mehreren, empfindlichen, trockenen Gegenständen dient.

Fig.1

Die Erfindung betrifft eine Verpackung für Gegenstände, insbesondere Lebensmittel, welche zumindest teilweise aus gebackenem Teig auf der Basis von Stärke und/oder Mehl besteht.

Eine derartige Verpackung ist aus der DE 36 39 185 A1 bekannt. Damit die Verpackung leicht verrottbar ist, als Futtermittel oder fallweise auch als Lebensmittel verwendet werden kann, besteht sie aus gebackenem Teig auf der Basis von Stärke und/oder Mehl. Damit derartige Verpackungen Gegenstände aufnehmen und umhüllen können, sind sie als Hohlgefäße, bestehend aus einem Oberteil und einem Unterteil, ausgebildet. Zur Herstellung derartiger Hohlgefäße aus gebackenem Teig sind jedoch beheizbare Backformen erforderlich, in welche der Flüssige Teig eingefüllt und anschließend gebacken wird. Derartige beheizbare Backformen sind teuer in der Herstellung, wobei zur rationellen Herstellung von Behältern gleicher Form und Größe eine größere Anzahl von untereinander gleichen Backformen erforderlich ist. Diese Backformen werden im Kreislauf geführt, nacheinander mit dem flüssigen Teig gefüllt, dann beheizt, anschließend abgekühlt und zu einer Entnahmestation geführt, wo die Verpackungen nacheinander aus den Backformen entnommen werden. Gerade wegen der Vielzahl von untereinander gleichen beheizbaren Backformen, die zur Herstellung einer einzigen Behälterform und -größe erforderlich sind, wird die Herstellung derartiger Verpackungen aus gebackenem Teig verteuert. Außerdem sind Verpackungen dieser Art auch nicht zum getrennten Verpacken von mehreren empfindlichen Gegenständen in einer Packung geeignet. Zum getrennten Verpacken von empfindlichen Gegenständen benötigt man nämlich Einsätze, die die Gegenstände in der Verpackung in Abstand voneinander halten.

Derartige Einsätze werden beispielsweise bei der Verpackung von Flaschen in Kartons verwendet. Sie bestehen aus gekreuzten Stegen, die aus Wellpappe oder Karton geschnitten, mit Einschnitten versehen sind. Wellpappe oder Karton verrottet jedoch verhältnismäßig langsam und zur Verpackung von Lebensmitteln wäre Spezialkarton erforderlich.

Bei der Verpackung von Lebensmitteln, insbesondere Süßwaren, wie Pralinen, Negerküssen und dgl., werden deshalb heutzutage meist tiefgezogene Einsätze aus Kunststoff verwendet. Diese Kunststoffeinsätze bereiten jedoch erhebliche Entsorgungsprobleme.

In neuester Zeit wurde der Versuch unternommen, Einsätze für Pralinenpackungen aus Waffelteig herzustellen, wie er sonst z.B. für Eistüten und dgl. verwendet wird. Derartige Einsätze erfordern auch teure beheizte Backformen, Backzangen genannt, und sie haben den Nachteil, daß sie verhältnismäßig starr sind und deshalb beim Verpak-

kungsvorgang sowie Transport leicht zerbrechen können.

Der Erfindung liegt deshalb die Aufgabe zugrunde, eine Verpackung der eingangs erwähnten Art zu schaffen, die für die getrennte Verpackung von mehreren empfindlichen, trockenen Gegenständen geeignet ist und zumindest teilweise ohne die Verwendung von speziellen Backformen preiswert herstellbar, sowie entsorgungsfreundlich ist.

Dies wird nach der Erfindung dadurch erreicht, daß sie einen Einsatz aufweist, der durch Schneiden oder Stanzen einer ebenen Platte aus dem gebackenen Teig hergestellt ist und zum getrennten Verpacken von mehreren empfindlichen, trockenen Gegenständen dient.

Bei den zur Herstellung der Einsätze verwendeten Platten handelt es sich um ein Material, wie es für Oblaten zum Backen von beispielsweise Lebkuchen, Makronen und sonstigem Kleingebäck verwendet wird. Die zur Herstellung der Einsätze verwendeten Platten aus Stärke und/oder Mehl werden in genau der gleichen Weise mittels ebener Backeisen gebacken, wie sie bei der Herstellung von Backoblaten üblich sind. Zur Herstellung sind also weder teure Backformen noch eine besondere Herstellungstechnik erforderlich. Die weitere Verarbeitung der Platten mittels Schneiden und Stanzen erfordert relativ einfache und universell verwendbare Maschinen und Vorrichtungen, so daß die Einsätze der neuartigen Verpackung verhältnismäßig preiswert herstellbar sind. Die Einsätze sind auch biegsam und elastisch, so daß die Bruchgefahr beim Verpackungsvorgang und Transport sehr gering ist. Außerdem handelt es sich bei den aus Stärke und/oder Mehl gebackenen Platten um ein Lebensmittel, welches mit anderen Lebensmitteln in unmittelbare Berührung kommen darf, ohne daß lebensmittelrechtliche Probleme entstehen. Ein Hauptvorteil der erfindungsgemäß ausgestalteten Einsätze besteht ferner darin, daß sie nach Gebrauch leicht verrottbar, kompostierbar, sowie verfütterbar und bei Verwendung entsprechender Geschmackszusätze gegebenenfalls auch eßbar sind. Damit sind sie entsorgungs- und umweltfreundlich.

Vorteilhafte Ausgestaltungen der Erfindung sind in den Unteransprüchen gekennzeichnet.

Die Erfindung ist in folgendem, anhand von in der Zeichnung dargestellten Ausführungsbeispielen näher erläutert. Es zeigen:

Figur 1 ein erstes Ausführungsbeispiel in Draufsicht,

Figur 2 einen Querschnitt nach der Linie II-II der Figur 1,

Figur 3 ein zweites Ausführungsbeispiel in Draufsicht,

Figur 4 einen Querschnitt nach der Linie IV-IV der Figur 3.

Die Erfindung ist bei den gezeigten Ausführungsbeispielen anhand einer Verpackung für sogenannte Negerküsse näher erläutert. Bei Negerküssen handelt es sich um eine sehr empfindliche Süßware, bestehend aus einem dünnen Waffelboden und einer darauf angeordneten weichen Schaummasse, die beide von einem hauchdünnen Schokoladeüberzug umgeben sind. Damit diese zerbrechlichen Gebilde unversehrt vom Hersteller zum Kunden gelangen können, müssen die Negerküsse voneinander getrennt und gegen Verrutschen gesichert in der Verpackung angeordnet werden. Um dies sicherzustellen, ist der erfindungsgemäße Einsatz vorgesehen.

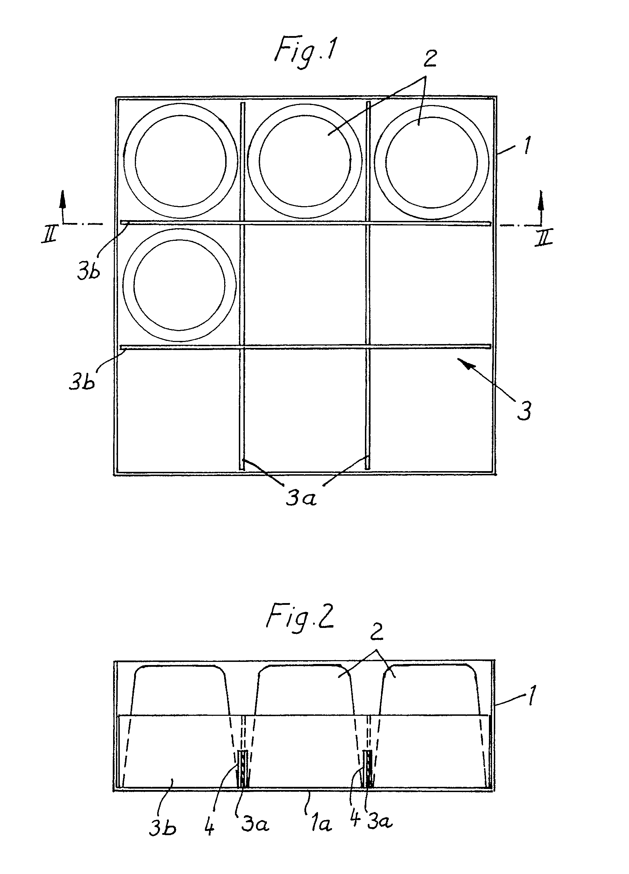

Die Verpackung besteht aus einer rechteckigen Schachtel 1 aus geeignetem Material, die durch einen nicht dargestellten Deckel verschließbar ist. In dieser Schachtel 1 sind beim gezeigten Ausführungsbeispiel neun Negerküsse 2 verpackt. Um die Negerküsse voneinander getrennt zu halten und gegen Verrutschen in der Schachtel 1 zu sichern, ist der Einsatz 3 vorgesehen. Dieser besteht bei dem in Figur 1 und 2 dargestellten Ausführungsbeispiel aus senkrecht zum Packungsboden 1a angeordneten, gekreuzten Stegen 3a und 3b, von denen jeweils zwei Stege 3a parallel und in Abstand voneinander und senkrecht zu Stegen 3b angeordnet sind, die ihrerseits ebenfalls parallel und in Abstand voneinander vorgesehen sind. An den Kreuzungsstellen der Stege 3a und 3b weist jeder Steg einen sich über die Hälfte seiner Höhe erstreckenden Einschnitt 4 auf, wobei die Einschnitte der Stege 3a oben und die Einschnitte der Stege 3b unten angeordnet sind.

Zur Herstellung der Stege 3a und 3b wird eine ebene Platte verwendet, die aus einem gebackenen Teig auf der Basis von Stärke und/oder Mehl besteht. Dieser Teig wird unter Verwendung von Wasser, Stärke und/oder Mehl und weiteren Zusätzen hergestellt, kann eingefärbt sein und außerdem auch Geschmacksstoffe enthalten, wenn der Einsatz eßbar sein soll. Die Stege 3a, 3b werden zweckmäßig aus der Platte in der gewünschten Größe ausgestanzt, wobei gleichzeitig auch die Schlitze 4 ausgestanzt werden. Die Dicke der Platte richtet sich nach Größe und Gewicht der zu verpackenden Gegenstände und kann beispielsweise 1,0 bis 2 mm betragen. Die Rezeptur des Teiges wird so eingestellt, daß die Platte eine relativ feste Konsistenz, ähnlich wie Karton hat, aber trotzdem noch ausreichend biegsam und elastisch ist. Um die Elastizität und Festigkeit des Einsatzes 3 zu erhöhen, kann der Teig Zusätze von Pflanzenfasern, wie z.B. Speisefeinkleie, mit hohem Anteil ballaststoffhaltiger Fasern enthalten. Die Erhöhung der Elastizität und Festigkeit wird durch die Pflanzenfasern in ähnlicher Weise bewirkt wie z.B. bei glasfaserverstärkten Kunststoffen.

Das für die Herstellung des Einsatzes 3 verwendete Material hat den Vorteil, daß es unter dem Einfluß von Feuchtigkeit rasch verrottet bzw. kompostiert. Es wurde festgestellt, daß es im Kompost ähnlich wie ein Schnellkompostierungsmittel wirkt und den Kompostierungsvorgang beschleunigt.

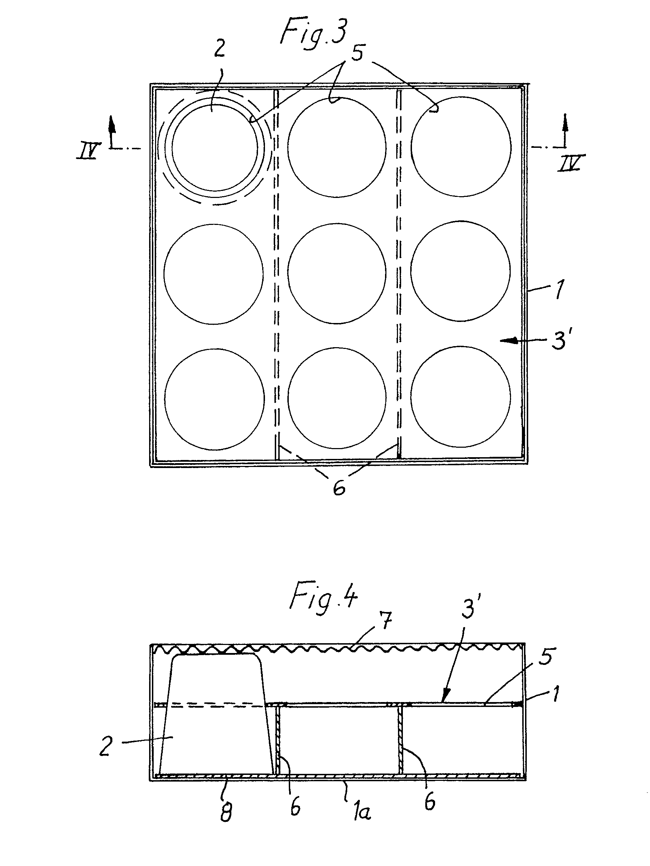

Bei dem in Figur 3 und 4 dargestellten Ausführungsbeispiel ist der Einsatz 3' als parallel zum Packungsboden gehaltener Zwischenboden ausgebildet. Dieser Zwischenboden weist mehrere, der Kontur des Füllgutes angepaßte Ausstanzungen 5 auf, die in Abstand voneinander angeordnet sind. Im Falle der Negerküsse 2 sind die Ausstanzungen 5 kreisrund.

Der Zwischenboden 3' kann durch geeignete Ausgestaltung der Schachtel 1, beispielsweise durch einen Absatz in Abstand vom Packungsboden 1a gehalten sein. Besonders zweckmäßig ist jedoch die in Figur 3 und 4 dargestellte Ausführungsform, bei welcher als Abstandshalter zwei zwischen das Füllgut eingelegte Stege 6 dienen. Diese lose eingelegten Stege 6 werden durch die Negerküsse 2 in ausreichendem Maß gegen Umfallen gehalten. Die Stege 6 bestehen aus dem gleichen Material wie der Einsatz 3', nämlich aus einer Platte aus gebackenem Teig auf der Basis von Stärke und/oder Mehl. Sowohl der Zwischenboden 3' als auch die Stege 6 können durch Stanzen in einfacher Weise hergestellt werden.

Die Oberfläche der ebenen Platte, aus der die Einsätze 3, 3' bzw. deren Teile und auch die Stege 6 hergestellt werden, kann glatt oder auch strukturiert sein.

Gegebenenfalls kann die Platte auch in sich gewellt sein, so daß ein hieraus hergestellter Einsatz 7, wie es in Figur 4 gezeigt ist, diese wellige Struktur aufweist. Eine derartige Wellenstruktur ist dann von Vorteil, wenn der Einsatz 7 als sogenanntes Kissen als Auflage für empfindliche Produkte, wie z.B. Pralinen, verwendet wird. Zur Herstellung derartiger Kissen könnte man aber auch dickere Platten aus Oblatenteig mit weicher Konsistenz verwenden.

Da es sich bei dem für die Herstellung der Einsätze verwendeten Material um ein Lebensmittel handelt, welches bedenkenlos mit den zu verpakkenden Lebensmitteln in Berührung kommen darf, wäre es auch denkbar, einen Einlegeboden 8 aus Oblatenteig herzustellen und diesen auf dem Packungsboden 1a anzuordnen, wie es in Figur 4 dargestellt ist. In diesem Fall kann man dann die als Verpackung dienende Schachtel aus besonders billiger und eventuell auch unbeschichteter Pappe herstellen, insbesondere solcher Pappe, die ganz oder Teilweise aus Recyclingprodukten besteht. Durch den Einlegeboden 8, das Kissen 7 und den Zwischenboden 3' wird jeglicher Kontakt zwischen den in der Packung enthaltenen Lebensmitteln und der Packung selbst vermieden. Erforderlichenfalls können auch an den Seitenwänden der Packung Einlagen, die aus Platten aus gebackenem Teig auf der Basis von Stärke und/oder Mehl hergestellt sind, vorgesehen sein.

Der erfindungsgemäße Einsatz ist aus den oben genannten Gründen besonders für die Verpackung von empfindlichen Lebensmitteln, wie z.B. den erwähnten Negerküssen und Pralinen, geeignet. Sie können jedoch gegebenenfalls auch zur Verpackung anderer empfindlicher Gegenstände, wie z.B. Ampullen, verwendet werden.

**Patentansprüche**

1. Verpackung für Gegenstände, insbesondere Lebensmittel, welche zumindest teilweise aus gebackenem Teig auf der Basis von Stärke und/oder Mehl besteht, **dadurch gekennzeichnet,** daß sie einen Einsatz (3a, 3b; 3') aufweist, der durch Schneiden oder Stanzen einer ebenen Platte aus dem gebackenen Teig hergestellt ist und zum getrennten Verpacken von mehreren, empfindlichen, trockenen Gegenständen dient.

2. Verpackung nach Anspruch 1, **dadurch gekennzeichnet,** daß der Teig der ebenen Platte Zusätze von Pflanzenfasern enthält.

3. Verpackung nach Anspruch 1 oder 2, **dadurch gekennzeichnet,** daß der Einsatz aus senkrecht zum Verpackungsboden (1a) angeordneten, gekreuzten Stegen (3a, 3b) besteht, die mit Einschnitten (4) versehen und ineinandergesteckt sind.

4. Verpackung nach Anspruch 1 oder 2, **dadurch gekennzeichnet,** daß der Einsatz als parallel zum Packungsboden (1a) gehaltener Zwischenboden (3') ausgebildet ist, der mehrere der Kontur des Füllgutes (2) angepaßte Ausstanzungen (5) aufweist.

5. Verpackung nach Anspruch 4, **dadurch gekennzeichnet,** daß der Zwischenboden (3') durch senkrecht zum Packungsboden (1a) angeordnete, zwischen das Füllgut (2) eingelegte Stege (6) in Abstand vom Packungsboden (1a) gehalten ist, wobei die Stege (6) aus dem gleichen Material bestehen wie der Einsatz (3').

6. Verpackung nach einem der Ansprüche 1 - 5, **dadurch gekennzeichnet,** daß die ebene Platte eine strukturierte Oberfläche aufweist.

7. Verpackung nach einem der Ansprüche 1 - 5, **dadurch gekennzeichnet,** daß die ebene Platte in sich gewellt ist.

Fig.1

Fig.2

Fig.3

Fig.4